# EUROPÄISCHE PATENTANMELDUNG

(11) **EP 4 378 829 A1**
(43) Veröffentlichungstag der Anmeldung: **05.06.2024**
(21) Anmeldenummer: 23213049.2
(22) Anmeldetag: 29.11.2023
(51) Int. Cl.: B64C 27/08, B64C 27/28, B64C 29/00, B64D 29/02, B64D 33/08

(54) **LUFTLEITVORRICHTUNG EINES SENKRECHT-START- UND -LANDUNGSLUFTFAHRZEUGS UND EIN SENKRECHT-START- UND -LANDUNGSLUFTFAHRZEUG**

(30) Priorität: 30.11.2022 DE 102022131799
(71) Anmelder: Rolls-Royce Deutschland Ltd & Co KG, 15827 Blankenfelde-Mahlow (DE)
(72) Erfinder: Batista de Jesus, Antonio, 15827 Blankenfelde-Mahlow (DE); Reeh, Andreas, 15827 Blankenfelde-Mahlow (DE)

(57) **Zusammenfassung**

Die Erfindung betrifft eine Luftleitvorrichtung (5) für ein Senkrecht-Start- und - Landungsluftfahrzeug (10), wobei eine Nacellevorrichtung (1) mit einer Antriebsvorrichtung (12) über eine Pylonvorrichtung (2) mit einer Tragfläche (1) des Senkrecht-Start- und -Landungsluftfahrzeugs (10) verbunden ist und mittels einer Verschwenkvorrichtung (3) um eine Drehachse (D) zwischen einer ersten Position (A), insbesondere einer Vortriebsposition und einer zweiten Position (B), insbesondere einer Auftriebsposition, relativ zur Pylonvorrichtung (2) verschwenkbar ist, dadurch gekennzeichnet, dass eine erste Einlassöffnung (6) der Luftleitvorrichtung (5) an der Pylonvorrichtung (2) in dem Bereich angeordnet ist, in dem die von der Antriebsvorrichtung (12) in der zweiten Position (B) geförderte Luft (L) auf die Pylonvorrichtung (2) im Bereich des maximal vom Propeller erzeugten Druckes auftrifft und dass die von der Antriebsvorrichtung (12) über die erste Einlassöffnung (6) eingeführte Luft als Kühlluft zur Antriebsvorrichtung (12) führbar ist.

## Beschreibung

Die Erfindung betrifft eine Luftleitvorrichtung eines Senkrecht-Start- und - Landungsluftfahrzeugs mit den Merkmalen des Anspruchs 1 und ein Senkrecht-Start und -Landungsluftfahrzeug mit den Merkmalen des Anspruchs 10.

Luftfahrzeuge, die senkrecht starten und landen können (im Englischen: VTOL: *vertical take off and landing*), sind grundsätzlich bekannt. Wird als Antriebsvorrichtung eines solchen Luftfahrzeuges ein elektrischer Antrieb verwendet, so wird dieses auch als eVTOL Luftfahrzeug bezeichnet. Gerade für den Einsatz von Luftfahrzeugen im städtischen Bereich (im Englischen: UAM: *urban air mobility*) sind solche Luftfahrzeuge von erheblichem Interesse.

Dabei kommen grundsätzlich unterschiedliche Bauformen zum Einsatz, wie z.B. reine Drehflügler oder Bauformen mit schwenkbaren Tragflächen oder schwenkbaren Antrieben.

Bei einer Ausführung mit schwenkbaren Antrieben werden diese z.B. mittels einer schwenkbaren Nacellevorrichtung (auch als Gondeln bezeichnet) von einer Auftriebsposition in eine Vortriebsposition gebracht. Die Nacellevorrichtungen sind dabei über eine Pylonvorrichtung mit einer Tragfläche verbunden, wobei die Verschwenkung um eine Achse am Gehäuse der Pylonvorrichtung erfolgt.

Es besteht die Aufgabe, verbesserte Nacellevorrichtungen zu schaffen, die insbesondere eine effiziente Strömungsführung in der Auftriebsposition erlaubt.

Die Aufgabe wird durch eine Luftleitvorrichtung für ein Senkrecht-Start- und - Landungsluftfahrzeug mit den Merkmalen des Anspruchs 1 gelöst.

Dabei ist eine Nacellevorrichtung mit einer Antriebsvorrichtung des Senkrecht-Start- und -Landungsluftfahrzeugs über eine Pylonvorrichtung mit einer Tragfläche des Senkrecht-Start- und -Landungsluftfahrzeugs verbunden. Mittels einer Verschwenkvorrichtung ist die Nacellevorrichtung mit der Antriebsvorrichtung um eine Drehachse zwischen einer Vortriebsposition und einer Auftriebsposition relativ zur Pylonvorrichtung verschwenkbar.

Eine erste Einlassöffnung einer Luftleitvorrichtung (z.B.: Lufteinlass- und luftführungseinrichtung) ist an der Pylonvorrichtung in dem Bereich angeordnet, in dem die von der Antriebsvorrichtung in der Auftriebsposition geförderte Luft auf die Pylonvorrichtung auftrifft. Damit kann die von der Antriebsvorrichtung geförderte Luft über die erste Einlassöffnung der Luftleitvorrichtung in das Innere der der Pylonvorrichtung und auch der Antriebsvorrichtung geführt werden, um dort z.B. eine kühlende Wirkung zu entfalten.

Insbesondere kann die Antriebsvorrichtung somit einen Propeller aufweisen, der im Betrieb eine Drehfläche aufweist, wobei die erste Einlassöffnung in dem Bereich der senkrechten Projektion der Drehfläche auf die Oberseite der Pylonvorrichtung liegt. Dies ist der Bereich der aufprallenden Luft und / oder der Bereich des maximal vom Propeller erzeugten Druckes, die von der Antriebsvorrichtung in der Auftriebsposition nach unten gefördert wird und wie benötigt umgeleitet wird, um Komponenten zu kühlen. Wenn dies erste Einlassöffnung an der radialen Position des maximalen Propellerdrucks im Schwebeflug angeordnet ist, liegt eine hohe Druckdifferenz an, was sich positiv auf den Kühlmassenstrom auswirkt.

Somit kann die von der Antriebsvorrichtung über die erste Einlassöffnung eingeführte Luft als Kühlluft zur Antriebsvorrichtung geführt werden. Somit kann auf die Pylonvorrichtung aufprallende Luft z.B. einen Elektromotor kühlen, der einen Propeller der Antriebsvorrichtung antreibt. Durch den Abstand zwischen Einlassposition und Antrieb ergibt sich auch eine verlustärmere Verteilungsmöglichkeit des Luftmassenstroms auf mehrere Komponenten.

Damit die erste Einlassöffnung, d.h. bei einer pyloninterne Luftführung auch in der Vortriebsposition Luft aufnehmen kann, ist die erste Einlassöffnung in einer Ausführungsform mindestens teilweise als NACA-Einlauf ausgebildet. Diese Einläufe weisen u.a. konvergierende Seitenwände auf.

Eine weitere Ausführungsform der Luftleitvorrichtung weist eine zweite Einlassöffnung auf, über die Kühlluft insbesondere von der Unterseite der Pylonvorrichtung in der Vortriebsposition zur Antriebsvorrichtung führbar ist. Auch die zweite Einlassöffnung kann mindestens teilweise als NACA-Einlauf ausgebildet sein oder auch als konventioneller Pitot-Einlass.

Da die Luftleitvorrichtung Luft aus der Umgebung in das Innere der Pylonvorrichtung und / oder die Antriebsvorrichtung leitet, könnte auch Staub und andere Verunreinigungen in das Innere gelangen. Daher ist in einer Ausführungsform mindestens eine Filtervorrichtung zur Filterung und / oder eine Abscheidungsvorrichtung von Partikeln aus der Luft vorgesehen, die durch die erste Einlassöffnung und / oder die zweite Einlassöffnung eingeführt werden.

Für eine besonders kompakte Bauform ist die Luftleitvorrichtung im Inneren der Pylonvorrichtung angeordnet.

Bei einer weiteren Ausführungsform ist in einem nicht-schwenkbaren Bereich der Pylonvorrichtung und / oder in der schwenkbaren Nacellevorrichtung ein Inverter und jeweils ein Teil eines Inverters angeordnet, wobei im schwenkbaren Bereich der Pylonvorrichtung ein Elektromotor angeordnet ist. Da ein Inverter einen Kühlbedarf hat, kann der Inverter in jedem Fall mit der Kühlluft versorgt werden, die aus der Luftleitvorrichtung stammt.
in einem nicht-schwenkbaren Bereich der Pylonvorrichtung ein Inverter und im schwenkbaren Bereich der Pylonvorrichtung ein elektrischer Motor angeordnet. Dies ermöglicht u.a. die effiziente Kühlung von Komponenten (insbesondere die Verwendung von luftgekühlten Elektromotoren) ohne zusätzlichen Lüfter und eine effiziente und verlustarme Aufteilung des Kühlluftstroms auf unterschiedliche Komponenten (z.B. Motor und Inverter). Auch können Komponenten integriert werden, die einen relativ hohen Druckverlust aufweisen, wie z.B. Filter oder Partikelabscheider.

Die erste Einlassöffnung und / oder die zweite Einlassöffnung kann in einer Ausführungsform mit einer ansteuerbaren Tür (z.B. in Form einer Klappe) verschließbar sein. Im Fall des Geradausflugs (Cruise) könnte die erste Einlassöffnung verschlossen sein, da dabei keine in vertikaler Richtung geförderte Luft vorliegt. Der Luftwiderstand würde in diesem Fall reduziert werden. Auch könnte während einer Stillstandszeit des Luftfahrzeugs die Einlassöffnung verschlossen werden. Ferner kann die ansteuerbare Tür im geöffneten Zustand und bei geeigneter Luftführung auch als weiteres Luftleitmittel dienen, um Kühlluft aufzunehmen und sie an die gewünschte Stelle zu leiten.

Die Aufgabe wird auch durch ein Senkrecht- Start- und -Landungsluftfahrzeug mit den Merkmalen des Anspruchs 10 gelöst.

Dabei kann die Antriebseinheit und die Luftführung über eine entsprechende Dichtung, insbesondere mit einer Verschwenkvorrichtung gekoppelt sein, die als Hebelgetriebe ausgebildet ist, insbesondere mit einem hydraulisch, elektrisch oder pneumatisch angetriebenen Hebelgetriebe. Diese Art von Hebelgetrieben erlauben die Übertragung größerer Kräfte, so dass auch eine schwere Nacellevorrichtung bewegt und in Position gehalten werden kann.

Auch kann die Pylonvorrichtung mit einer nicht-verschwenkbaren Antriebsvorrichtung verbunden sein, die zusätzlich zur verschwenkbaren Antriebsvorrichtung Auftrieb verleihen kann.

Im Zusammenhang mit den in den Figuren werden Ausführungsbeispiele erläutert. Dabei zeigt
Figur 1 eine Teilansicht eines bekannten Luftfahrzeugs mit Einlassöffnungen für Luft;
Figur 2 eine schematische Ansicht eines Senkrecht-Start und - Landungsluftfahrzeugs;
Figur 3 eine schematische Darstellung der Luftführung bei dem Senkrecht-Start und -Landungsluftfahrzeug;
Figur 4 eine schematische Darstellung der Luftführung einer Ausführungsform des Senkrecht-Start und -Landungsluftfahrzeugs gemäß Figur 3;
Figur 5 eine schematische Darstellung einer weiteren Ausführungsform des Senkrecht-Start und -Landungsluftfahrzeugs in Vortriebsposition mit einer zweiten Einlassöffnung für Luft;
Figur 6 eine schematische Darstellung einer weiteren Ausführungsform des Senkrecht-Start und -Landungsluftfahrzeugs Vortriebsposition mit einem NACA-Einlass an einer ersten Einlassöffnung;
Figur 7 eine Variation der Ausführungsform gemäß Figur 3 mit einer Vorrichtung zur Filterung und Abscheidung von Partikeln aus der Luft;
Figur 8A eine Detaildarstellung einer Variation der Ausführungsform gemäß Fig. 4 mit einem Inverter in der verschwenkbaren Nacellevorrichtung.
Figur 8B eine Detaildarstellung einer Variation der Ausführungsform gemäß Fig. 4 mit einem Inverter in der Pylonvorrichtung.
Figur 8C eine Detaildarstellung einer Variation der Ausführungsform gemäß Fig. 4 mit einem Teil eines Inverters in der verschwenkbaren Nacellevorrichtung und einem anderen Teil des Inverters in der Pylonvorrichtung.

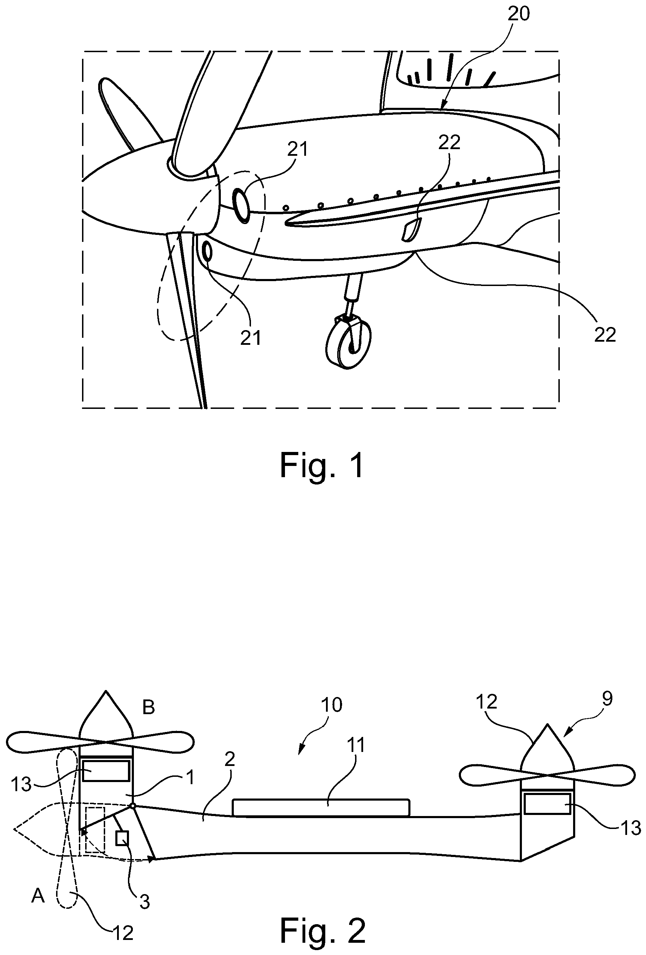

In Figur 1 ist ein an sich bekanntes Luftfahrzeug 20 dargestellt, das mit einem Propeller 12 angetrieben wird. Der Propeller 12 ist hier so ausgebildet, dass er nicht für den Senkrechtstart und eine Senkrechtlandung ausgebildet ist.

Aber Figur 1 zeigt, dass dieses Luftfahrzeug 20 hinter der Drehebene des Propellers mehrere Lufteinlässe 21 (sichtbar sind hier zwei) aufweist. Damit wird vom Propeller geförderte Luft in Richtung der Lufteinlässe gefördert.

An der Längsseite des Luftfahrzeugs ist ein weiterer Lufteinlass in Form eines an sich bekannten NACA-Einlasses 22 angeordnet, der längs des Rumpfes des Luftfahrzeugs 20 entlangströmende Luft aufnimmt.

Ein NACA-Einlass 22 ist ein strömungsgünstiger Lufteinlass in der Außenhaut von Fahrzeugen. Durch schräge Seitenkanten - in Figur 1 erkennbar - werden Luftwirbel erzeugt, die eine langsame Grenzschichtströmung verdrängen. Dies bewirkt eine Geschwindigkeitskomponenten nach Innen und induziert einen Massenstrom in den NACA-Einlass 22. Deshalb kann der der NACA-Einlass 22 für einen gegebenen Luftstrom klein ausgeführt werden und vergrößert den Luftwiderstand nur wenig.

Figur 2 hingegen zeigt ein Senkrecht-Start- und -Landungsluftfahrzeug 10 (häufig auch nur als Senkrechtstarter bezeichnet), das grundsätzlich anders aufgebaut ist als das Luftfahrzeug 20 gemäß Figur 1.

Dabei ist aus Gründen der Übersichtlichkeit vor allem die Tragfläche 11 und die an der Unterseite der Tragfläche 11 angeordnete Pylonvorrichtung 2 dargestellt. Insbesondere die Passagierkabine ist somit hier nicht dargestellt. In anderen, hier nicht dargestellten Ausführungsformen kann die Pylonvorrichtung 2 auch an der Oberseite der Tragfläche 11 angeordnet sein.

Die hier dargestellte Ausführungsform ist ein Senkrecht-Start- und - Landungsluftfahrzeug 10, bei dem eine Antriebsvorrichtung 12, hier ein Rotor oder Propeller, verschwenkbar mit einer Nacellevorrichtung 1 gekoppelt ist. Angetrieben wird der Rotor über einen Elektromotor 13.

Für einen Flug in der Horizontalen, d.h. einer Vortriebsposition A (gestrichelt dargestellt), ist der Rotor 12 an der Vorderseite der Pylonvorrichtung 2 so ausgerichtet, dass er im Betrieb Luft horizontal in Richtung der Tragfläche 11 bewegt, so dass ein Auftrieb entsteht. Dies ist die erste Position A (Vortriebsposition) der Antriebsvorrichtung 12. Bei konventionellen Luftfahrzeugen 20 ist das die Position, in der gestartet und gelandet wird, wobei jeweils ausgedehnte Start- und Landebahnen benötigt werden.

Damit ein Senkrecht-Start- und -Landungsluftfahrzeug 10 in der Vertikalen starten und landen kann, wird eine Antriebsvorrichtung 12 benötigt, die auch Schub in der Vertikalen erzeugen kann. Die Antriebsvorrichtung 12 ist hier an einer Nacellevorrichtung 1 (auch Gondel genannt) angeordnet, die als ein relativ zur Pylonvorrichtung 2 bewegliche Gehäuse ausgebildet ist.

Bei der in Figur 2 mit durchgezogenen Linien dargestellten Ausführungsform wird dies dadurch erreicht, dass die Antriebsvorrichtung 12 in eine zweite Position B (Auftriebsposition) verschwenkt wird, so dass die vom Rotor geförderte Luft einen Schub nach unten erzeugt. Die Verschwenkung erfolgt dabei relativ zur Pylonvorrichtung 2 nach oben (hier im Uhrzeigersinn).

Für Starten und Landen kann zwischen den beiden Positionen A und B gewechselt werden. Eine solche Verschwenkung ist an sich bekannt.

Bei der hier dargestellten Ausführungsform ist die Drehachse D der Verschwenkung am Gehäuse der Pylonvorrichtung 2 angeordnet. Die Nacellevorrichtung 1 - und damit die Antriebsvorrichtung 12 - können so relativ zur Pylonvorrichtung 2 verschwenkt werden.

Eine Verschwenkvorrichtung 3, mit der die Verschwenkung der Nacellevorrichtung 1 bewirkt wird, ist in der Figur 2 aus Gründen der Übersichtlichkeit nur schematisch im Inneren der Pylonvorrichtung 2 dargestellt. Diese kann z.B. als Hebelgetriebe ausgeführt sein.

Des Weiteren weist die darstellte Ausführungsform des Senkrecht-Start- und - Landungsluftfahrzeugs 10 auch eine nicht-verschwenkbare Antriebsvorrichtung 9 auf, die nur für den Auftrieb eingesetzt wird. Auch diese wird mit einem Elektromotor 13 angetrieben.

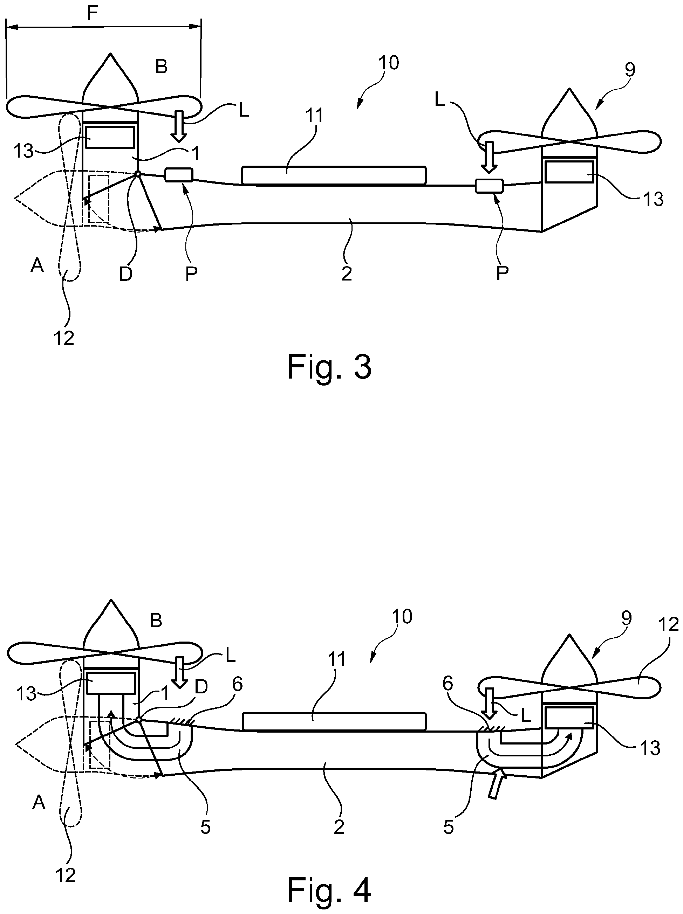

In der Fig. 3 ist die gleiche Konfiguration wie in Fig. 2 dargestellt, so dass auf die entsprechende Beschreibung Bezug genommen werden kann.

Die Propeller an der verschwenkbaren Antriebsvorrichtung 12 und der nicht-verschwenkbaren Antriebsvorrichtung 9 fördern jeweils in der Auftriebsposition B einen vertikalen Luftstrom L nach unten. Dieser Luftstrom L trifft auf einer Prallfläche P auf der Pylonvorrichtung 2 auf. Die Prallfläche P ist hier vor allem schematisch zu verstehen, da die Luft L unterhalb einer Drehfläche F des Propellers u.a. auf die Pylonvorrichtung 2 trifft. Die geförderte Luft L trifft vor allem auf den Teil der Pylonvorrichtung 2, der in einer senkrechten Projektion der Drehfläche F auf die Oberseite der Pylonvorrichtung 2 liegt.

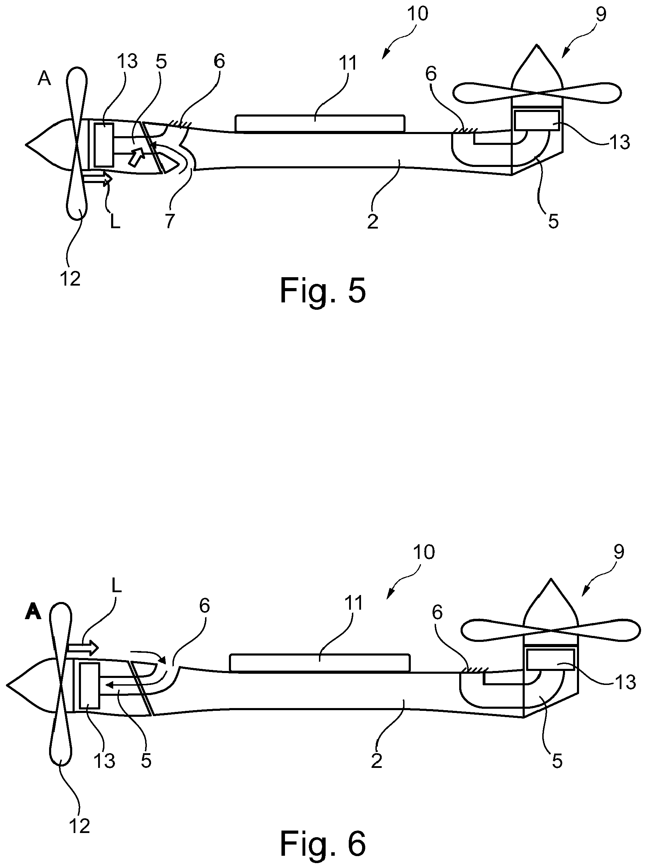

In diesem Bereich der Pylonvorrichtung 2 ist in der Ausführungsform gemäß Figur 4 eine erste Einlassöffnung 6 einer Luftleitvorrichtung 5 angeordnet, so dass die geförderte Luft L zum Teil durch die erste Einlassöffnung 6 eintreten kann, so dass sie durch die Luftleitvorrichtung 5 in das Innere der Pylonvorrichtung 2 gefördert wird. Auf Grund des Drucks der geförderten Luft L an der ersten Einlassöffnung 6 kann auf zusätzliche Luftfördermaßnahmen in vielen Fällen verzichtet werden. Es ist grundsätzlich aber möglich, im Strömungsverlauf durch die Luftleitvorrichtung z.B. Ventilatoren anzuordnen, die in der Figur 4 nicht dargestellt sind. Auch kann die erste Einlassöffnung 6 einen gerundeten Einlass aufweisen, um Strömungsverluste am Einlass zu minimieren. Auch kann die erste Einlassöffnung als NACA-Einlass ausgebildet sein (siehe Figuren 1 und 6).

Die in der Luftleitvorrichtung 5 geförderte Luft kann z.B. zur Kühlung eines Elektromotors 13 dienen, der den Propeller antreibt. In der hier dargestellten Ausführungsform ist der Elektromotor 13 in der schwenkbaren Nacellevorrichtung 1 angeordnet. In einer alternativen, hier nicht dargestellten Ausführungsform kann im nicht-schwenkbaren Teil, d.h. der Pylonvorrichtung 2 ein Inverter angeordnet sein.

Eine gleichwirkende Vorrichtung mit einer ersten Einlassöffnung 6 und mit einer anschließenden Luftleitvorrichtung 5 ist auch im hinteren Bereich der Pylonvorrichtung 2 angeordnet, so dass auch die von der nicht-verschwenkbaren Antriebsvorrichtung 9 geförderte Luft als Kühlluft für die nicht-verschwenkbare Antriebsvorrichtung 9 verwendbar ist.

Bei der Ausführungsform der Figur 4 ist die Drehachse D der Nacellevorrichtung 1 in der Wandung der Pylonvorrichtung 2 angeordnet. Alternativ kann die Drehachse D auch anders angeordnet sein. Grundsätzlich ist die Nacellevorrichtung 1 mittels der Verschwenkvorrichtung 3 um die Drehachse D zwischen einer ersten Position, insbesondere der Vortriebsposition A und einer zweiten Position, insbesondere der Auftriebsposition B, relativ zur Pylonvorrichtung 2 verschwenkbar. Dabei kann die Drehachse D aber innerhalb der Pylonvorrichtung 2 oder der Nacellevorrichtung 1 angeordnet sein, wobei die Drehachse D insbesondere auf oder in einer axialen Mittelebene der Pylonvorrichtung 2 liegen kann. Durch die Verlagerung der Drehachse D in das Innere z.B. der Pylonvorrichtung 2 kann die Verschwenkung der Nacellevorrichtung räumlich kompakt erfolgen. Dabei kann die Verschwenkvorrichtung 3 auch ein Teil der Pylonvorrichtung 2 sein, insbesondere in diese integriert sein. Dies kann z.B. bedeuten, dass Teile der Wandung der Pylonvorrichtung mitverschwenkt werden. Eine Luftführungsvorrichtung im Inneren der Pylonvorrichtung 2 kann in der ersten Position A und in der zweiten Position B der Nacellevorrichtung 1, insbesondere auch in Positionen dazwischen, durchgängig von Luft durchströmbar sein. Dazu kann die Luftführungsvorrichtung mindestens eine Auslassöffnung aufweisen, wobei die Auslassöffnung einen ersten Auslassbereich in der Seitenwand der Nacellevorrichtung 2 und einen zweiten Auslassbereich im axialen Endbereich der Nacellevorrichtung 1 aufweisen. Die Auslassöffnung kann z.B. dem Abscheiden von Partikeln dienen, die auf Grund einer Beschleunigung durch Zentrifugalkräfte ausgetragen werden können. Die Auslassöffnungen können auch der Regulierung des Luftmassenstroms dienen.

Ferner kann die Nacellevorrichtung 1 so ausgebildet sein, dass bei einer Kopplung mit einer Luftleitvorrichtung 5 im Inneren der Pylonvorrichtung 2 diese immer von Luft durchströmbar ist, und zwar in der ersten Position A und in der zweiten Position B der Nacellevorrichtung 1 und auch in Positionen dazwischen. Für eine besonders effiziente Ausgestaltung ist das Innere der Pylonvorrichtung 2 mindestens teilweise als Luftleitvorrichtung 5 ausgebildet. Dabei kann die Nacellevorrichtung 1 in einer Ausführungsform mindestens eine Auslassöffnung aufweisen, wobei die Auslassöffnung einen ersten Auslassbereich in der Seitenwand und einen zweiten Auslassbereich im axialen Endbereich der Luftleitungsvorrichtung aufweist. Somit kann Luft in unterschiedlichen Richtungen aus der Nacellevorrichtung 1 ausströmen (oder auch einströmen, je nach Hauptströmungsrichtung). Diese Anordnung des Auslassbereichs ermöglicht, dass in jeder Schwenklage der Nacellevorrichtung 1 Luft durch die Nacellevorrichtung und die Pylonvorrichtung 2 strömen kann.

Diese Art der Anordnung der Drehachse D und / oder die Ausbildung der Nacellevorrichtung 1 kann auch in allen anderen hier beschriebenen Ausführungsformen verwendet (siehe z.B. Figuren 5 bis 7) werden.

In der Figur 5 ist eine Abwandlung der Ausführungsform gemäß Figur 4 dargestellt, so dass auf die entsprechende Beschreibung Bezug genommen wird.

Die verschwenkbare Antriebsvorrichtung 12 ist hier in der Vortriebsposition B dargestellt, so dass keine Luft L vom Propeller in die erste Einlassöffnung gefördert wird. Vielmehr wird die Luft L nach hinten gefördert.

Die Pylonvorrichtung 2 weist eine zweite Einlassöffnung 7 auf, die als NACA-Einlass (siehe Figur 1) ausgebildet ist. Damit kann an der Pylonvorrichtung 2 vorbeiströmende Luft effizient als Kühlluft in das Innere der Luftleitvorrichtung 5 geführt werden. Je nach den Druckverhältnissen in der Luftleitvorrichtung 5 kann es sinnvoll sein, dass in dieser Betriebsweise der Weg zur ersten Einlassöffnung 6 in der Luftleitvorrichtung 5 - z.B. durch eine Klappe oder ein Ventil - verschlossen wird, damit keine Kühlluft abströmen kann.

Die nicht-verschwenkbare Antriebsvorrichtung 9 ist hier ohne zweite Einlassöffnung 7 ausgebildet, kann aber grundsätzlich auch eine solche aufweisen.

In der Figur 6 ist eine weitere Variation der Ausführungsform gemäß Figur 4 dargestellt, wobei sich die verschwenkbare Antriebsvorrichtung 12 in der Vortriebsposition B befindet, so dass keine Luft L vom Propeller in die erste Einlassöffnung gefördert wird. Vielmehr wird die Luft L nach hinten gefördert.

Die erste Einlassöffnung 6, die in der Auftriebsposition A den vertikal nach unten gerichteten Luftstrom L aufnimmt, ist hier mit einem NACA-Einlass (siehe Figur 1) versehen, so dass an der Pylonvorrichtung 2 entlangströmende Luft effizient in das Innere der Pylonvorrichtung 2 führbar ist.

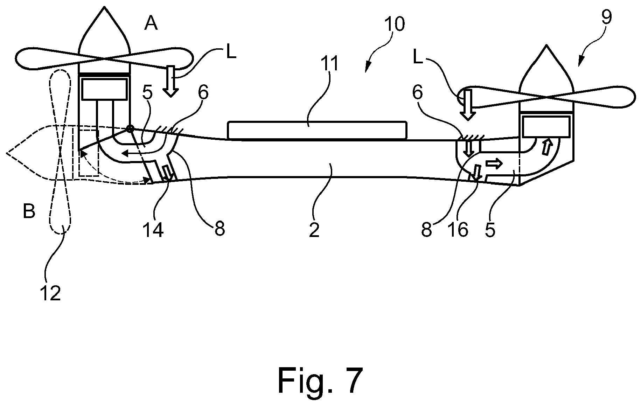

In der Figur 7 ist eine weitere Ausführungsform dargestellt, die zusätzlich zu den Ausführungsformen gemäß der Figuren 3 bis 6 in der Luftleitvorrichtung 5 der verschwenkbaren Antriebsvorrichtung 12 und der nicht-verschwenkbaren Antriebsvorrichtung 9 eine Filtervorrichtung 8 aufweist, mit der Partikel aus der durch die erste Einlassöffnung 6 strömende Luft herausgefiltert werden können. Damit wird insbesondere eine Ansammlung von solchen Partikeln im luft-gekühlten Elektromotor 13 verhindert oder zumindest wird die Ansammlung minimiert. Der Filter kann auch als Abscheider (z.B. ein Zyklon) ausgebildet sein.

Die aufgefangenen oder abgeschiedenen Partikel können dann über eine Auslassöffnung 14 aus der Pylonvorrichtung ausgeschleust werden.

Die erste Einlassöffnung 6 und die zweite Einlassöffnung 7 sind in den Fig. 3 bis 7 als ständig offen dargestellt. Es ist grundsätzlich möglich, die Einlassöffnungen 6, 7 mit einer ansteuerbaren Tür zu versehen, die die Einlassöffnungen 6, 7 im Geradeausflug verschließen kann. Damit wird der Strömungswiderstand reduziert, wenn das Luftfahrzeug sich im Geradeausflug befindet.

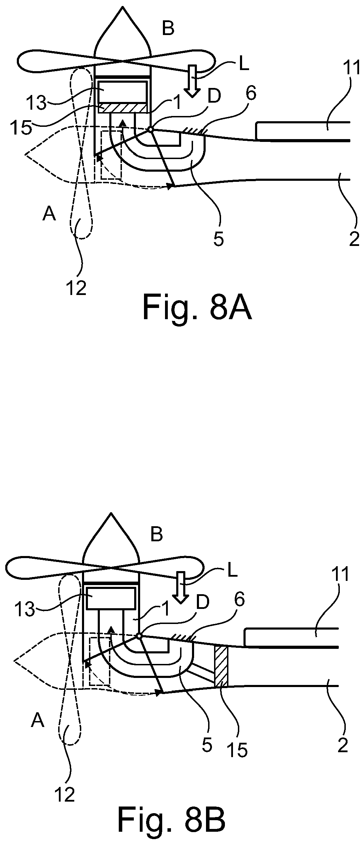

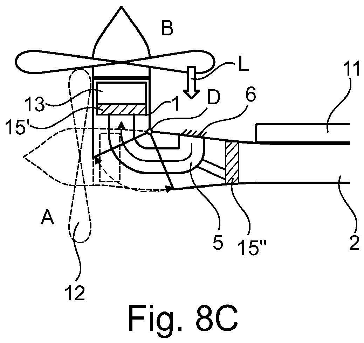

In den Fig. 8A bis 8C ist eine Variation der Ausführungsform gemäß Fig. 4 dargestellt, so dass auf die obige Beschreibung Bezug genommen werden kann.

In der ersten Variante gemäß Fig. 8A sind der Elektromotor 13 und ein Inverter 15 gemeinsam in der verschwenkbaren Nacellevorrichtung 1 angeordnet. Die Kühlluft wird über die Luftleitvorrichtung 5 zu beiden Komponenten geführt.

Wie in der Fig. 8B dargestellt, ist es aber auch möglich, dass der Inverter 15 in der Pylonvorrichtung 2 angeordnet ist und mit dem Elektromotor 13 in der verschwenkbaren Nacellevorrichtung 1 gekoppelt ist. Über einen Kanal kann Kühlluft aus der Luftleitvorrichtung 5 zu dem Inverter 15 geführt werden.

Der Inverter 15 kann aber auch mehrere Teile 15`, 15" aufweisen, von denen ein Teil 15' in der verstellbaren Nacellevorrichtung 1, der andere Teil 15" in der Pylonvorrichtung 2 angeordnet ist. Die Kühlung des Inverter 15`, 15" kann dann so erfolgen, wie das im Zusammenhang mit den Figuren 8A und 8B beschrieben ist.

### Bezugszeichenliste

- 1: Nacellevorrichtung
- 2: Pylonvorrichtung
- 3: Verschwenkvorrichtung
- 5: Luftleitvorrichtung
- 6: erste Einlassöffnung
- 7: zweite Einlassöffnung
- 8: Filtervorrichtung
- 9: nicht-verschwenkbare Antriebsvorrichtung

- 10: Senkrecht-Start- und -Landungsluftfahrzeug
- 11: Tragfläche
- 12: Antriebvorrichtung, Rotor
- 13: Elektromotor
- 14: Auslassöffnung für Partikel
- 15: Inverter
- 15': erster Teil eines Inverters
- 15": zweiter Teil eines Inverters

- 20: Luftfahrzeug
- 21: Lufteinlass
- 22: NACA-Einlass

- A: Vortriebsposition der Antriebsvorrichtung
- B: Auftriebsposition der Antriebsvorrichtung
- D: Drehachse der verschwenkbaren Nacellevorrichtung
- F: Drehfläche des Propellers
- L: von Propeller geförderte Luft
- P: Aufprallfläche auf Pylonvorrichtung

## Patentansprüche

1. Luftleitvorrichtung (5) für ein Senkrecht-Start- und -Landungsluftfahrzeug (10), wobei eine Nacellevorrichtung (1) mit einer Antriebsvorrichtung (12) über eine Pylonvorrichtung (2) mit einer Tragfläche (1) des Senkrecht-Start- und - Landungsluftfahrzeugs (10) verbunden ist und mittels einer Verschwenkvorrichtung (3) um eine Drehachse (D) zwischen einer Vortriebsposition (A) und einer Auftriebsposition (B) relativ zur Pylonvorrichtung (2) verschwenkbar ist,
**dadurch gekennzeichnet, dass**
eine erste Einlassöffnung (6) der Luftleitvorrichtung (5) an der Pylonvorrichtung (2) in dem Bereich angeordnet ist, in dem die von der Antriebsvorrichtung (12) in der Auftriebsposition (B) geförderte Luft (L) auf die Pylonvorrichtung (2) im Bereich des maximal vom Propeller erzeugten Druckes auftrifft und dass die von der Antriebsvorrichtung (12) über die erste Einlassöffnung (6) eingeführte Luft als Kühlluft zur Antriebsvorrichtung (12) führbar ist.

2. Luftleitvorrichtung (5) nach Anspruch 1, **dadurch gekennzeichnet, dass** die Antriebsvorrichtung (12) einen Propeller aufweist und der im Betrieb eine Drehfläche (F) aufweist, wobei die erste Einlassöffnung (6) in dem Bereich der senkrechten Projektion der Drehfläche (F) auf die Oberseite der Pylonvorrichtung (2) liegt.

3. Luftleitvorrichtung (5) nach mindestens einem der vorhergehenden Ansprüche, **dadurch gekennzeichnet, dass** die erste Einlassöffnung (6) mindestens teilweise als NACA-Einlauf ausgebildet ist.

4. Luftleitvorrichtung (5) nach mindestens einem der vorhergehenden Ansprüche, **gekennzeichnet durch** eine zweite Einlassöffnung (7), über die Kühlluft, insbesondere von der Unterseite der Pylonvorrichtung (1), in der Vortriebsposition (A) zur Antriebsvorrichtung (12) führbar ist.

5. Luftleitvorrichtung (5) nach Anspruch 4, **dadurch gekennzeichnet, dass** die zweite Einlassöffnung (7) mindestens teilweise als NACA-Einlauf ausgebildet ist.

6. Luftleitvorrichtung (5) nach mindestens einem der vorhergehenden Ansprüche, **gekennzeichnet durch** mindestens eine Filtervorrichtung (8) zur Filterung und / oder eine Abscheidungsvorrichtung von Partikeln aus der Luft, die durch die erste Einlassöffnung (6) und / oder die zweite Einlassöffnung (7) eingeführt werden.

7. Luftleitvorrichtung (5) nach mindestens einem der vorhergehenden Ansprüche, **dadurch gekennzeichnet, dass** diese im Inneren der Pylonvorrichtung (2) angeordnet ist.

8. Luftleitvorrichtung (5) nach mindestens einem der vorhergehenden Ansprüche, **dadurch gekennzeichnet, dass** in einem nicht-schwenkbaren Bereich der Pylonvorrichtung (2) und / oder in der schwenkbaren Nacellevorrichtung (1) ein Inverter (15) und jeweils ein Teil eines Inverters (15`, 15") angeordnet ist, wobei im schwenkbaren Bereich der Pylonvorrichtung (2) ein Elektromotor (13) angeordnet ist.

9. Luftleitvorrichtung (5) nach mindestens einem der vorhergehenden Ansprüche, **dadurch gekennzeichnet, dass** die erste Einlassöffnung (6) und / oder die zweite Einlassöffnung (7) mit einer ansteuerbaren Tür verschließbar ist.

10. Senkrecht- Start- und -Landungsluftfahrzeug (10) mit mindestens einer Pylonvorrichtung (2) an einem Flügel (11), wobei die mindestens eine Pylonvorrichtung (2) eine Luftleitvorrichtung (5) nach mindestens einem der Ansprüche 1 bis 9 aufweist.

11. Senkrecht- Start- und -Landungsluftfahrzeug (10) nach Anspruch 10, **dadurch gekennzeichnet, dass** die Antriebseinheit und ggf. die Luftführung (12) mit einer Verschwenkvorrichtung (3) gekoppelt ist, die als Hebelgetriebe ausgebildet ist, insbesondere mit einem hydraulisch, elektrisch oder pneumatisch angetriebenen Hebelgetriebe.

12. Senkrecht-Start- und -Landungsluftfahrzeug (10) nach Anspruch 10 oder 11, **dadurch kennzeichnet, dass** die Pylonvorrichtung (2) mit einer nicht-verschwenkbaren Antriebsvorrichtung (9) verbunden ist.
